# EUROPEAN PATENT SPECIFICATION

(11) **EP 4 470 891 B1**
(45) Date of publication and mention of the grant of the patent: **28.01.2026**
(21) Application number: 24179263.9
(22) Date of filing: 31.05.2024
(51) Int. Cl.: B62J 11/19, B62J 35/00, B62J 45/00, B62H 5/00

(54) **STRADDLED VEHICLE**
GRÄTSCHSITZFAHRZEUG
VÉHICULE À SELLE

(30) Priority: 02.06.2023 JP 2023091892
(43) Date of publication of application: 04.12.2024
(73) Proprietor: Yamaha Hatsudoki Kabushiki Kaisha, Iwata-shi, Shizuoka 438-8501 (JP)
(72) Inventor: TOMIMATSU, Masahiro, Iwata-shi, 438-8501 (JP)
(74) Representative: Studio Torta S.p.A.

(56) References cited:
- GB-A- 359 527
- JP-A- 2000 128 052
- JP-B2- 4 494 917
- JP-B2- 5 543 451
- JP-B2- 5 665 699

## Description

### Technical Field

The present disclosure relates to a straddled vehicle including a fuel tank.

### Prior Art

In a straddled vehicle such as a motorcycle, various electrical elements such as an ECU (Electronic Control Unit), an indicator lamp, a meter unit, a power supply device and an anti-theft device are provided. Each of these electrical elements is provided in each portion of the straddled vehicle in accordance with the use or function of the electrical element. Further, an electrical wire member for power supply or signal transmission is suitably provided among the plurality of electrical elements.

There is a straddled vehicle in which a fuel tank and a seat are arranged in this order in an upper portion of the vehicle in a rearward direction of the vehicle. In such a straddled vehicle, provision of an electrical element in the vicinity of the fuel tank, for example, facilitates access to the electrical element and improves maintainability of the electrical element.

However, when being provided on the fuel tank, the electrical element projects upwardly from the upper surface of the fuel tank. When the height position of the upper end portion of the electrical element is excessively high, the electrical element may unintentionally come into contact with the body of a rider of the straddled vehicle. Further, it degrades designability of the straddled vehicle.

In a motorcycle described in JP 2011-31717 A, a recess portion is formed in a portion of an upper surface of a fuel tank provided rearwardly of a head pipe. A metallic support is attached to the recess portion by welding. Further, an anti-theft device is attached onto the support as an electrical element. The anti-theft device has a terminal portion, and a harness as an electrical wire member is connected to the terminal portion. With the configuration, because being provided in the recess portion of the fuel tank, the anti-theft device does not project upwardly from the upper surface of the fuel tank.

As described above, in a case in which an electrical element is provided at the upper surface of the fuel tank, an electrical wire member extending from the electrical element may vibrate or freely move on the fuel tank, and thus it may shorten the service life of the fuel tank.
JP-B-4494917 discloses a straddled vehicle according to the preamble of claim 1.

### Description of the invention

An object of the present disclosure is to provide a straddled vehicle that can suppress shortening of a service life of a fuel tank caused by an electrical wire member while suppressing large projection of an electrical element farther upward of the fuel tank.

A straddled vehicle according to one aspect of the present disclosure includes a metallic fuel tank having an upper surface in which a recess portion is formed, an electrical element provided in the recess portion, an electrical wire member provided in association with the electrical element, and a protection member provided between the fuel tank and the electrical wire member.

With the present disclosure, it is possible to suppress shortening of the service life of a fuel tank caused by an electrical wire member while suppressing large projection of an electrical element farther upward of the fuel tank.

Other features, elements, characteristics, and advantages of the present disclosure will become more apparent from the following description of preferred embodiments of the present disclosure with reference to the attached drawings.

### Brief description of the drawings

Fig. 1 is a one-side view of a motorcycle according to one embodiment of the present disclosure;
Fig. 2 is a plan view of the motorcycle of Fig. 1;
Fig. 3 is an exploded view for explaining the configuration of a fuel tank and its peripheral members;
Fig. 4 is a plan view showing a plurality of constituent elements shown in Fig. 3 being sequentially attached onto the fuel tank;
Fig. 5 is a plan view showing the plurality of constituent elements shown in Fig. 3 being sequentially attached onto the fuel tank;
Fig. 6 is a plan view showing the plurality of constituent elements shown in Fig. 3 being sequentially attached onto the fuel tank;
Fig. 7 is a plan view showing the plurality of constituent elements shown in Fig. 3 being sequentially attached onto the fuel tank;
Fig. 8 is a plan view showing the plurality of constituent elements shown in Fig. 3 being sequentially attached onto the fuel tank;
Fig. 9 is a plan view of a protection member of Fig. 6;
Fig. 10 is a one-side view (left side view) of the protection member of Fig. 6;
Fig. 11 is a perspective view of the protection member of Fig. 6 as viewed from a position obliquely leftward, forward and upward of the motorcycle;
Fig. 12 is a perspective view of the protection member of Fig. 6 as viewed from a position obliquely leftward, upward and rearward of the motorcycle;
Fig. 13 is a diagram for explaining the effects of the configurations of the fuel tank and its peripheral members according to one embodiment of the present disclosure;
Fig. 14 is an enlarged plan view of a fuel cap device of Fig. 5;
Fig. 15 is a schematic cross-sectional view showing a first example of the configurations of a fuel tank and its peripheral members according to another embodiment;
Fig. 16 is a schematic cross-sectional view showing a second example of the configurations of a fuel tank 10 and its peripheral members according to another embodiment;
Fig. 17 is a schematic cross-sectional view showing a third example of the configurations of a fuel tank 10 and its peripheral members according to another embodiment;
Fig. 18 is a schematic cross-sectional view showing a fourth example of the configurations of a fuel tank 10 and its peripheral members according to another embodiment;
Fig. 19 is a schematic cross-sectional view showing a fifth example of the configurations of a fuel tank 10 and its peripheral members according to another embodiment; and
Fig. 20 is a schematic cross-sectional view showing an example of the configurations of a fuel tank and its peripheral members according to a reference embodiment.

### Embodiments of the invention

A straddled vehicle according to one embodiment of the present disclosure will be described below with reference to the drawings. A motorcycle will be described as one example of the straddled vehicle.

### 1. Schematic Configuration of Motorcycle

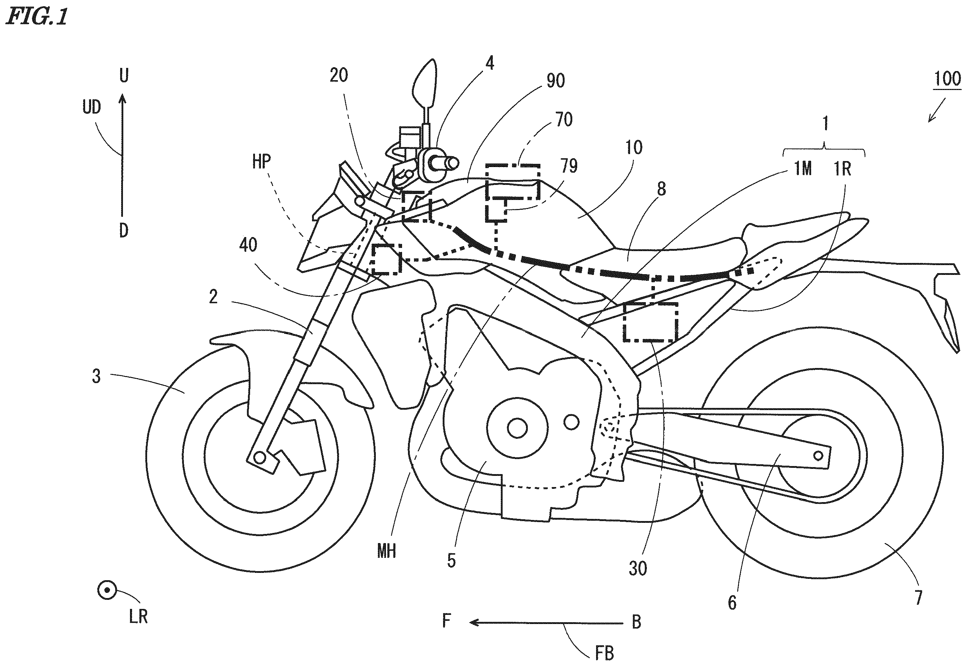

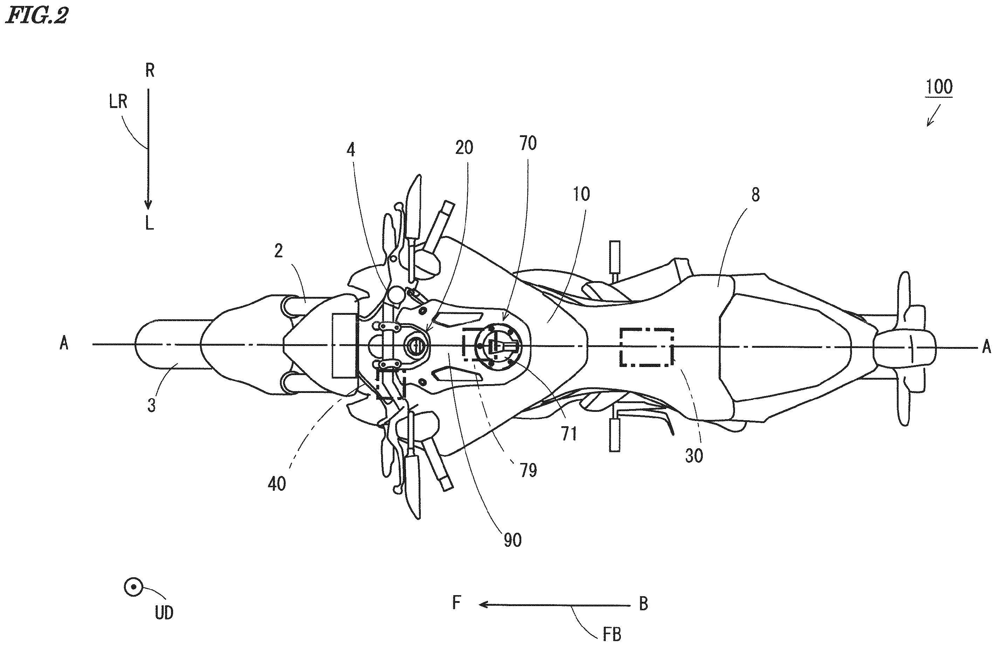

Fig. 1 is a one-side view of a motorcycle according to one embodiment of the present disclosure; Fig. 2 is a plan view of the motorcycle 100 of Fig. 1. In each of Figs. 1 and 2, the motorcycle 100 standing up to be perpendicular to the road surface is shown. In each of Fig. 1 and subsequent given diagrams, a forward-and-rearward direction FB, a leftward-and-rightward direction LR and an upward-and-downward direction UD of the motorcycle 100 are suitably indicated by arrows. The direction in which the arrow is directed in the forward-and-rearward direction FB is referred to as forward, and its opposite direction is referred to as rearward. Further, the direction in which the arrow is directed in the leftward-and-rightward direction LR is referred to as leftward, and its opposite direction is referred to as rightward. Further, the direction in which the arrow is directed in the upward-and-downward direction UD is referred to as upward, and its opposite direction is referred to as downward. Further, in each of Fig. 1 and subsequent given diagrams, reference characters F, B, L, R, U and D shown together with the arrows indicating directions indicate forward, rearward, leftward, rightward, upward and downward, respectively.

The motorcycle 100 of Fig. 1 includes a metallic body frame 1. The body frame 1 includes a main frame 1M and a rear frame 1R. The front end portion of the main frame 1M forms a head pipe HP. The main frame 1M is formed to extend rearwardly and downwardly from the head pipe HP. The rear frame 1R is attached to the main frame 1M so as to extend rearwardly and slightly upwardly from the rear end portion of the main frame 1M and its vicinity.

A front fork 2 is provided at the head pipe HP to be rotatable about the center axis of the head pipe HP. A front wheel 3 is rotatably supported at the lower end portion of the front fork 2. A handle 4 is provided at the upper end portion of the front fork 2.

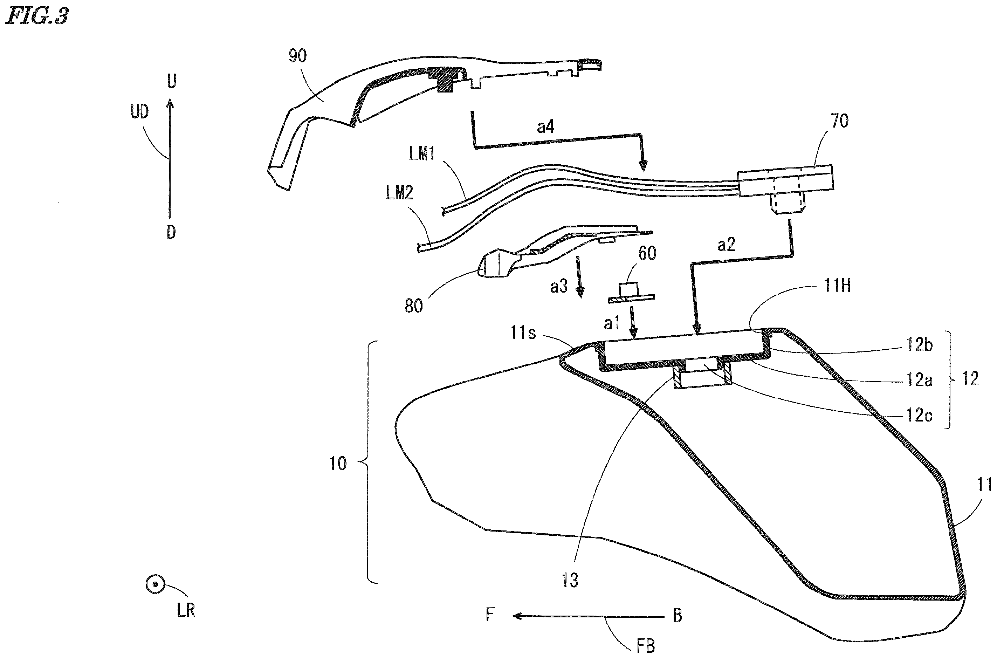

The main frame 1M supports an engine 5 at a position farther downward than the head pipe HP. A fuel tank 10 is provided to be located upwardly of the engine 5 and rearwardly of the head pipe HP. As shown in Fig. 2, a fuel cap device 70 is provided at the substantially center portion of the fuel tank 10 in plan view. The fuel cap device 70 is a device for opening and closing a fuel supply port 12c (Fig. 3) of the fuel tank 10 and includes a lid member 71 and a locking device 79. Details of the fuel cap device 70 will be described below.

A key cylinder 20 is provided forwardly of the fuel tank 10 so as to be located between the fuel tank 10 and the head pipe HP in the forward-and-rearward direction FB. A portion of the upper surface of the fuel tank 10 is covered by a tank cover 90 from above at a position in the vicinity of the key cylinder 20.

A seat 8 is provided rearwardly of the fuel tank 10. As shown in Fig. 1, the key cylinder 20, the fuel tank 10 and the seat 8 are supported by the body frame 1 and are located on the main frame 1M and the rear frame 1R.

A rear arm 6 is provided to extend rearwardly from a lower portion at the rear end of the main frame 1M. The rear arm 6 is supported at the main frame 1M via a pivot shaft. A rear wheel 7 is rotatably supported at the rear end portion of the rear arm 6. The rear wheel 7 is rotated as a drive wheel by motive power generated by the engine 5.

In the motorcycle 100 of Fig. 1, an ECU (Electronic Control Unit) 30 and a battery (not shown) are provided below the seat 8 or below the fuel tank 10, for example. Further, a security device 40 is provided in the vicinity of the key cylinder 20.

As indicated by the thick two-dots and dash line in Fig. 1, in the motorcycle 100 of the present example, a main harness MH for connecting a plurality of electrical elements to one another is attached to the body frame 1. Further, as shown by the thick dotted lines in Fig. 1, each of the plurality of electrical elements is connected to the main harness MH by a sub-harness. Thus, the key cylinder 20, the ECU 30, the security device 40, the fuel cap device 70 and the battery (not shown), described above, are electrically connected to one another. In this state, electrical power is supplied from the battery (not shown) to each of the key cylinder 20, the ECU 30, the security device 40 and the fuel cap device 70. Further, various signals are transmitted and received among the ECU 30, the key cylinder 20, the security device 40 and the fuel cap device 70.

### 2. Security Device 40 and Fuel Cap Device 70

The security device 40 is a so-called immobilizer, and has an electrical circuit that includes a CPU (Central Processing Unit) and a memory, or a microcomputer. The security device 40 stores a unique ID (identifier) code. When a key having a transponder is inserted into the key cylinder 20 and operated, the security device 40 reads an ID code stored in the transponder. Further, the security device 40 compares the read ID code with the ID code stored in the security device 40. In a case in which these identification codes match, the security device 40 provides a signal for permitting starting of the engine 5 to the ECU 30. On the other hand, in a case in which the compared two ID codes are different from each other, the security device 40 provides a signal for prohibiting starting of the engine 5 to the ECU 30.

In a case in which receiving the signal for permitting starting of the engine 5, the ECU 30 starts the engine 5 in response to a key operation performed by a user. On the other hand, in a case in which receiving the signal for prohibiting starting of the engine 5, the ECU 30 does not respond to a key operation performed by the user and does not start the engine 5.

Further, in the present embodiment, in a case in which receiving the signal for permitting starting of the engine 5, the ECU 30 provides a signal for permitting the user to open and close the fuel supply port 12c (Fig. 3) (hereinafter referred to as a permission signal) to the fuel cap device 70. On the other hand, in a case in which receiving the signal for prohibiting starting of the engine 5, the ECU 30 provides a signal for prohibiting the user from opening and closing the fuel supply port 12c (Fig. 3) (hereinafter referred to as a prohibition signal) to the fuel cap device 70.

In a case in which receiving the permission signal, the locking device 79 of the fuel cap device 70 causes the lid member 71 to change to an unlocked state in which the user can perform an operation of opening and closing the fuel supply port 12c (Fig. 3). On the other hand, in a case in which receiving the prohibition signal, the locking device 79 causes the lid member 71 to change to a locked state in which the user cannot perform an operation of opening and closing the fuel supply port 12c (Fig. 3) and the fuel supply port 12c (Fig. 2) is closed. Thus, it is possible to prevent vandalism such as insertion of a foreign object into the fuel tank 10, theft of fuel, etc. The permission signal and the prohibition signal, described above, may be generated by the security device 40. In this case, the security device 40 can directly output the generated permission signal and prohibition signal to the fuel cap device 70.

### 3. Configuration of Fuel Tank 10 and its Peripheral Members

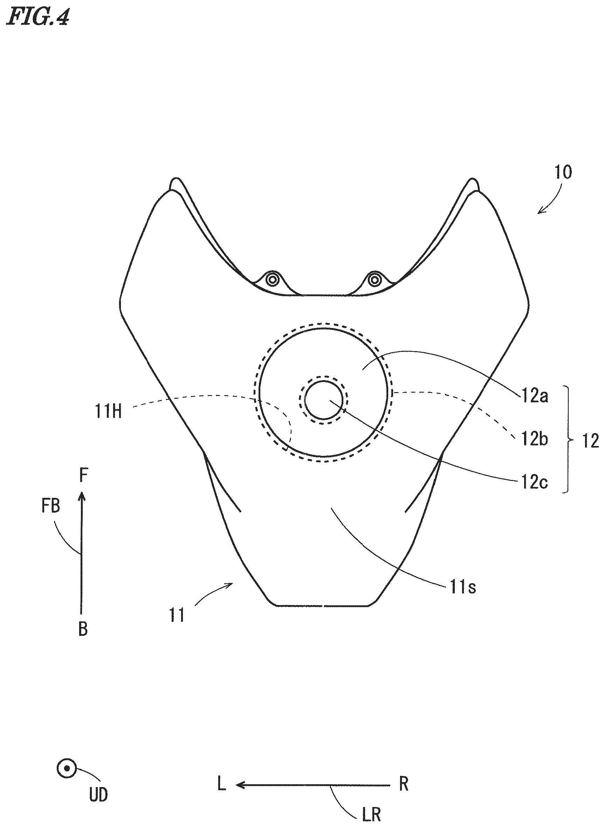

Fig. 3 is an exploded view for explaining the configurations of the fuel tank 10 and its peripheral members, and Figs. 4 to 8 are plan views showing a plurality of constituent elements (60, 70, 80, 90) shown in Fig. 3 being sequentially attached onto the fuel tank 10. As shown in Fig. 3, the attachment piece 60, the fuel cap device 70, the protection member 80 and the tank cover 90 are attached onto the fuel tank 10 of the present example. In the exploded view of Fig. 3, the fuel tank 10, the protection member 80 and the tank cover 90 are shown in longitudinal cross-sectional views. Each longitudinal cross-sectional view is a longitudinal cross-sectional view of a subject constituent element taken along a vertical plane including the line A-A of Fig. 2, and the line A-A of Fig. 2 is a vehicle central axis passing through the center of the motorcycle 100 in plan view.

The fuel tank 10 is formed of a metallic material and includes a tank main body 11, a filler member 12 and a guide pipe 13. Fig. 4 shows a plan view of the fuel tank 10. The tank main body 11 has an inner space for storing fuel, and is formed in a substantially V-shape in plan view as shown in Fig. 4. In the following description, an upwardly directed portion of the outer peripheral surface of the tank main body 11 is referred to as an upper surface 11s of the tank main body 11.

In the substantially center portion of the upper surface 11s of the tank main body 11, a circular filler opening 11H that upwardly opens the inner space of the tank main body 11 is formed. The filler member 12 is provided so as to close the filler opening 11H. The filler member 12 is a single member formed of a metallic material, and includes a disc-shaped bottom surface portion 12a and an annular peripheral wall portion 12b extending upwardly from the outer edge of the bottom surface portion 12a by a certain distance. More particularly, the peripheral wall portion 12b has a flat cylindrical shape extending upwardly from the outer edge of the bottom surface portion 12a by the certain distance.

The circular fuel supply port 12c is formed at a position slightly and rearwardly deviated from the center of the bottom surface portion 12a in plan view. The entire circumference of the upper end portion of the peripheral wall portion 12b is connected to the inner edge of the filler opening 11H of the tank main body 11 by welding. With such a configuration, the fuel tank 10 according to the present embodiment has a recess portion formed of the filler member 12 at the substantially center portion of its upper surface.

The guide pipe 13 is formed of a metallic material. As shown in Fig. 3, the guide pipe 13 is welded to a portion, in which the fuel supply port 12c is formed, of the bottom surface portion 12a of the filler member 12 and extends downwardly from the lower surface of the bottom surface portion 12a by a certain distance. Thus, the inner space of the fuel tank 10 and the external space above the fuel tank 10 communicate with each other through the fuel supply port 12c of the filler member 12 and the inner space of the guide pipe 13.

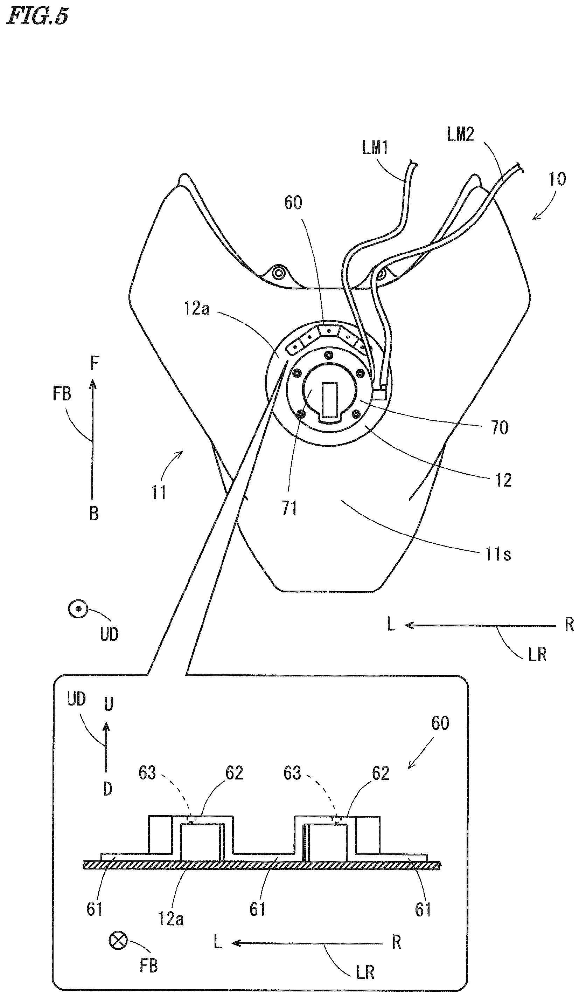

As indicated by the thick solid arrows a1 and a2 in Fig. 3, the attachment piece 60 and the fuel cap device 70 are attached onto the bottom surface portion 12a of the filler member 12. Fig. 5 is a plan view showing the attachment piece 60 and the fuel cap device 70 being attached onto the fuel tank 10 of Fig. 4. In Fig. 5, an enlarged back view of the attachment piece 60 as viewed in the forward direction is shown in the balloon.

The attachment piece 60 is fabricated by bending of a plurality of portions of a metallic plate-like member extending in a strip shape, for example. Specifically, as shown in the balloon of Fig. 5, the attachment piece 60 is formed in a rectangular zigzag shape as viewed from a position farther rearward than the attachment piece 60. The attachment piece 60 of the present example has three lower portions 61 and two upper portions 62. The three lower portions 61 are located at the same height in the upward-and-downward direction UD. The two upper portions 62 are located at the same height in the upward-and-downward direction UD. Further, each of the two upper portions 62 is located farther upwardly than the three lower portions 61 and between two lower portions 61 adjacent to each other in the leftward-and-rightward direction LR. Further, in each upper portion 62, a screw hole 63 for attachment of the protection member 80, described below, onto the fuel tank 10 is formed. The three lower portions 61 of the attachment piece 60 are connected onto the bottom surface portion 12a of the filler member 12 by welding such that the attachment piece 60 is located in the vicinity of the front end portion of the filler member 12.

As described above, the fuel cap device 70 includes the lid member 71 and the locking device 79 of Fig. 1. The fuel cap device 70 is attached to a portion in which the fuel supply port 12c (Fig. 4) is formed in the bottom surface portion 12a of the filler member 12. When the lid member 71 is put in the unlocked state by the locking device 79, the user can open the fuel supply port 12c by operating the lid member 71. On the other hand, when the lid member 71 is put in the locked state by the locking device 79, the user cannot open the fuel supply port 12c even when operating the lid member 71.

One end of the sub-harness LM1 and one end of a breather hose LM2 are connected to the fuel cap device 70. With the fuel cap device 70 being attached onto the fuel tank 10, the sub-harness LM1 and the breather hose LM2 are respectively drawn out forwardly from the fuel cap device 70. The other end of the sub harness LM1 is connected to the main harness MH of Fig. 1, for example. Thus, various signals are transmitted to the locking device 79, and power is supplied to the locking device 79.

Because the fuel tank 10 is formed of a metallic material, when the sub-harness LM1 and the breather hose LM2 come into contact with the upper surface 11s of the fuel tank 10, and vibrate or move freely, the upper surface 11s of the fuel tank 10 may be deteriorated due to friction.

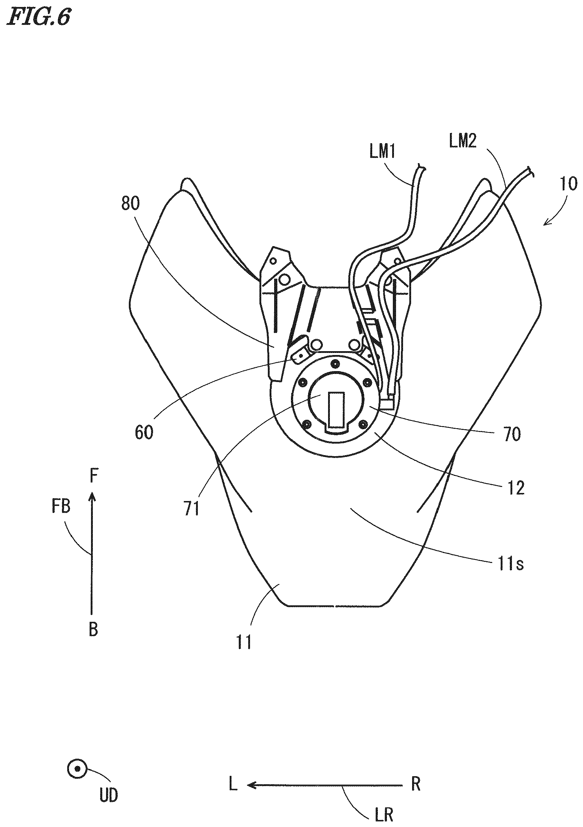

As such, in the present embodiment, as indicated by the thick solid arrow a3 in Fig. 3, the protection member 80 is attached onto the fuel tank 10. Fig. 6 is a plan view showing the protection member 80 being attached onto the fuel tank 10 of Fig. 5. The protection member 80 is a substantially plate-like member formed of a resin material, and is screwed onto the two upper portions 62 of the attachment piece 60 of Fig. 5.

At the time of attachment, the sub-harness LM1 and the breather hose LM2 that are drawn out from the fuel cap device 70 are arranged on the protection member 80 so as not to directly come into contact with the upper surface 11 s of the fuel tank 10. Thus, the upper surface 11s of the fuel tank 10 is protected.

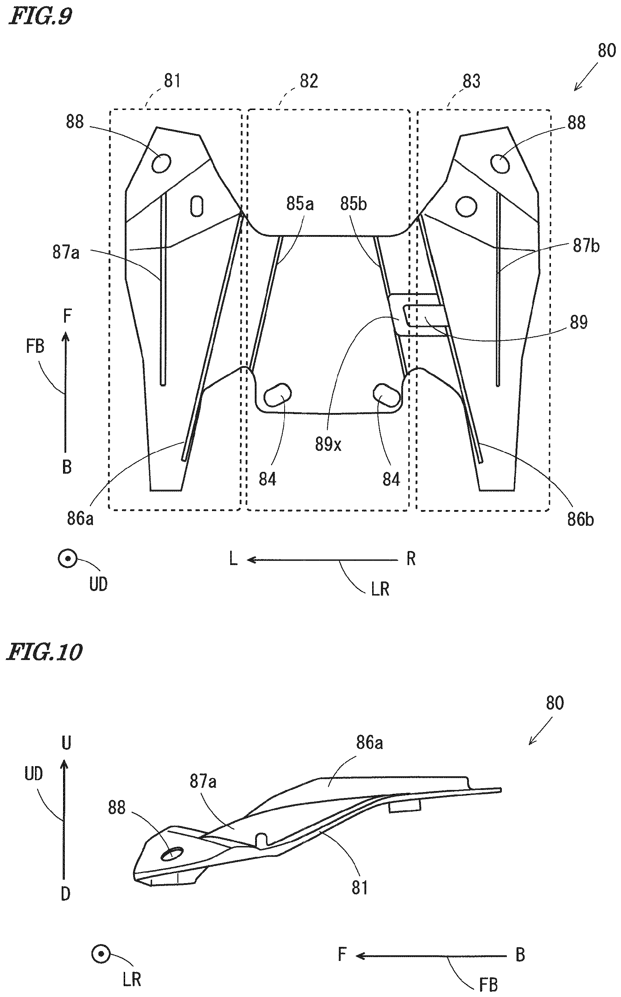

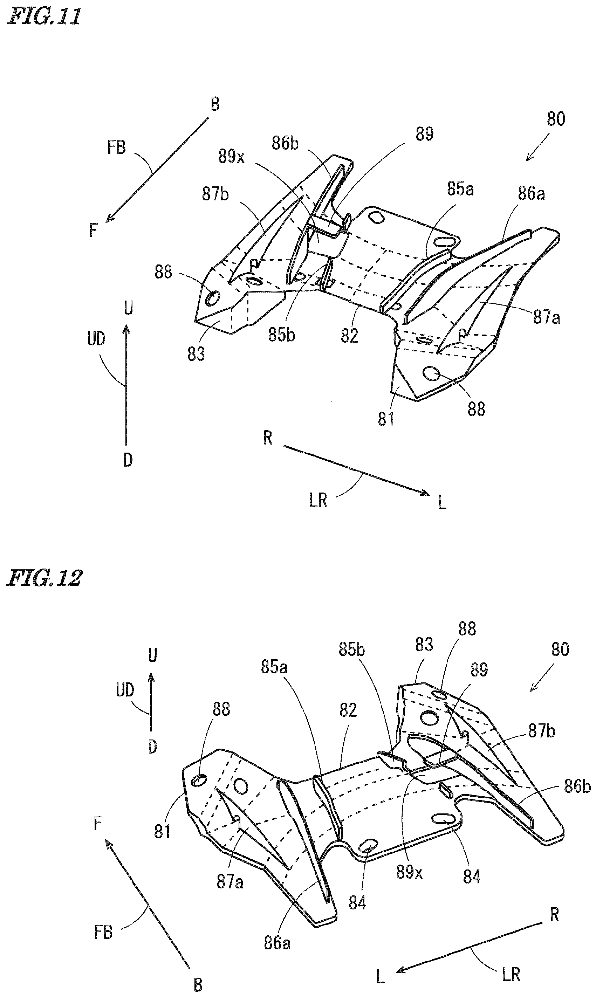

Here, the structure of the protection member 80 will be described. Fig. 9 is a plan view of the protection member 80 of Fig. 6, and Fig. 10 is a one-side view (left side view) of the protection member 80 of Fig. 6. Fig. 11 is a perspective view of the protection member 80 of Fig. 6 as viewed from a position obliquely leftward, forward and upward of the motorcycle 100, and Fig. 12 is a perspective view of the protection member 80 of Fig. 6 as viewed from a position obliquely leftward, rearward and upward of the motorcycle 100.

As shown in Fig. 9, the protection member 80 includes a plate-like left portion 81, a plate-like center portion 82 and a plate-like right portion 83 that are arranged from the left to the right in plan view. The center portion 82 is formed in a substantially rectangular shape. Two attachment elongated holes 84 are respectively formed in the rear end portion of the center portion 82 so as to be arranged in the leftward-and-rightward direction LR with a space therebetween. The two attachment elongated holes 84 correspond to the two screw holes 63 formed in the two upper portions 62 of the attachment piece 60 of Fig. 5, and are used to screw the protection member 80 to the attachment piece 60 as described above.

The left portion 81 and the right portion 83 have a bilaterally symmetrical configuration with respect to the center portion 82. The length of the left portion 81 and the right portion 83 in the forward-and-rearward direction FB is longer than the length of the center portion 82 in the forward-and-rearward direction FB. In the forward-and-rearward direction FB, the center portion 82 is located between the front end portions of the left portion 81 and the right portion 83, and the rear end portions of the left portion 81 and the right portion 83. In the vicinity of the front end portions of the left portion 81 and the right portion 83, a pair of left and right through holes 88 for attachment of the below-mentioned tank cover 90 onto the protection member 80 are formed.

In both of the left side portion and right side portion of the center portion 82, a pair of left and right first ribs 85a, 85b extending substantially in the forward-and-rearward direction FB are formed. More specifically, each of the first ribs 85a, 85b is slightly inclined with respect to the forward-and-rearward direction FB such that the distance between the first ribs 85a, 85b in the leftward-and-rightward direction LR is rearwardly and gradually increased. Also in the right side portion of the left portion 81 and the left side portion of the right portion 83, a pair of left and right second ribs 86a, 86b extending substantially in the forward-and-rearward direction FB are formed. More specifically, each of the second ribs 86a, 86b is slightly inclined with respect to the forward-and-rearward direction FB such that the distance between the second ribs 86a, 86b in the leftward-and-rightward direction LR is rearwardly and gradually increased. Further, in the substantially center of the left portion 81 and the substantially center of the right portion 83, a pair of left and right third ribs 87a, 87b extending in the forward-and-rearward direction FB are formed.

As shown in Figs. 10, 11 and 12, the first ribs 85a, 85b, the second ribs 86a, 86b and the third ribs 87a, 87b project respectively and upwardly from the upper surfaces of the plate-like left portion 81, the plate-like center portion 82 and the plate-like right portion 83. A substantially center portion of the right first rib 85b is cut away. In one portion of the right second rib 86b, a projection piece 89 extending leftwardly from the upper end portion of the second rib 86b by a certain distance is formed. The projection piece 89 overlaps with a cutout portion of the first rib 85b in the forward-and-rearward direction FB. As shown in Fig. 9, in the center portion 82 and the right portion 83, an opening 89x is formed in a portion overlapping with the projection piece 89 in plan view.

In the protection member 80 having the above-mentioned configuration, the plurality of ribs (85a, 85b, 86a, 86b, 87a, 87b) ensure the strength required for the protection member 80 to maintain a predetermined shape. Further, in the present example, a space located between the first rib 85b and the second rib 86b, that are located rightwardly, among the plurality of ribs (85a, 85b, 86a, 86b, 87a, 87b) and below the projection piece 89 forms a passage for the sub-harness LM1 and the breather hose LM2. That is, the first rib 85b, the second rib 86b and the projection piece 89 function as a guide portion that guides the sub-harness LM1 and the breather hose LM2 to the predetermined passage on the protection member 80. Further, in this case, the cutout portion of the first rib 85b, and the opening 89x in the center portion 82 and the right portion 83 form a work space for facilitating the accommodation of the sub-harness LM1 and the breather hose LM2 in the above-mentioned passage.

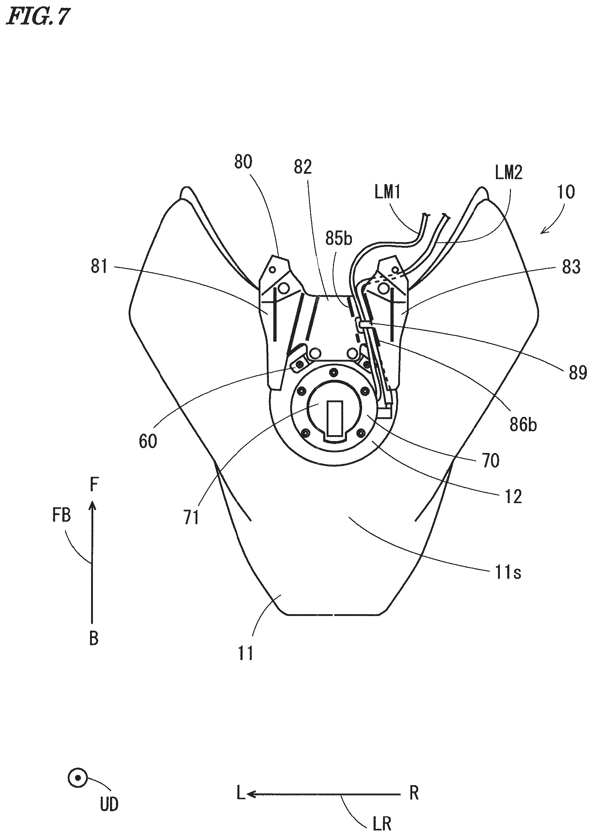

Fig. 7 shows that the sub-harness LM1 and the breather hose LM2 that are drawn out from the fuel cap device 70 of Fig. 6 are being arranged between the first rib 85b and the second rib 86b and below the projection piece 89. In this case, the portions, which are located above the fuel tank 10, of the sub-harness LM1 and the breather hose LM2 are bundled and held in the passage formed of the first rib 85b, the second rib 86b and the projection piece 89 of the protection member 80.

With the sub-harness LM2 and the breather hose LM2 being held in the predetermined passage in the protection member 80, the tank cover 90 is attached onto the fuel tank 10 as indicated by the thick solid arrow a4 in Fig. 3.

The tank cover 90 has a pair of left and right through holes corresponding to the pair of left and right through holes 88 of the protection member 80 of Fig. 9 in the vicinity of the front end portion thereof. Therefore, at the time of attachment of the tank cover 90, the tank cover 90 is positioned on the fuel tank 10 such that the pair of through holes of the tank cover 90 and the pair of through holes 88 of the protection member 80 overlap with each other. Further, screws are inserted into the pair of through holes of the tank cover 90 and the pair of through holes 88 of the protection member 80, and the tank cover 90 is screwed onto the protection member 80.

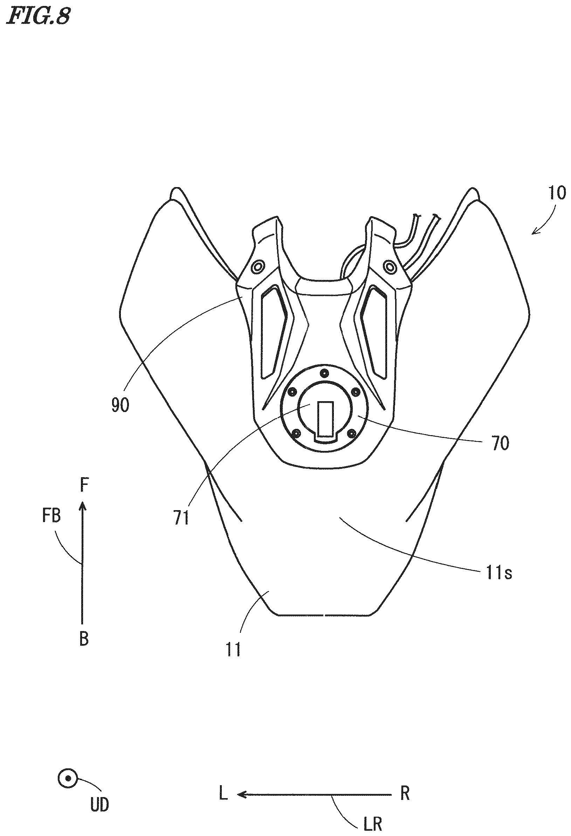

Fig. 8 is a plan view showing the tank cover 90 being attached onto the fuel tank 10 of Fig. 7. The tank cover 90 is formed to cover the entire filler member 12 of the fuel tank 10 and the entire protection member 80 except for the lid member 71 of the fuel cap device 70.

### 4. Effects

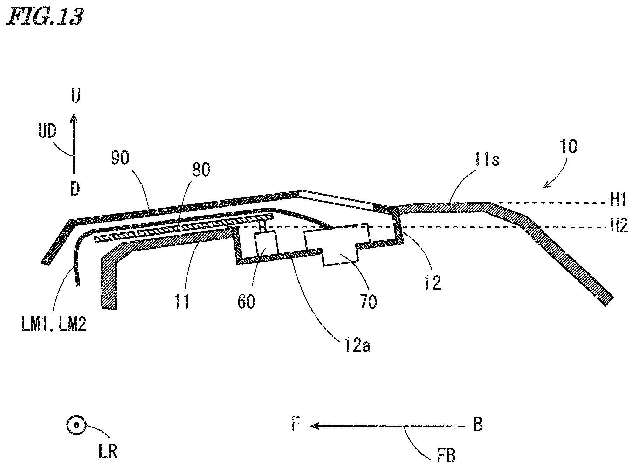

(a) Fig. 13 is a diagram for explaining the effects of the configurations of the fuel tank 10 and its peripheral members according to one embodiment of the present disclosure. In Fig. 13, the configurations of the fuel tank 10 and its peripheral members of the motorcycle 100 of Fig. 1 are shown in a schematic cross-sectional view for facilitating understanding of description.

As shown in Fig. 13, a portion of the upper surface of the fuel tank 10 according to the present embodiment is formed in a recess shape by the filler member 12. The fuel cap device 70 is provided on the bottom surface portion 12a of the filler member 12. That is, a recess portion is formed in the upper surface of the fuel tank 10, and the fuel cap device 70 is provided in the recess portion.

Thus, as compared to a case in which the fuel cap device 70 is provided in a portion, other than the filler member 12, of the upper surface of the fuel tank 10, large projection of the fuel cap device 70 upward of the fuel tank 10 is suppressed.

Further, the above-mentioned fuel tank 10 is formed of a metallic material, and the protection member 80 made of resin is provided between the fuel tank 10, and the sub-harness LM1 and the breather hose LM2. Therefore, deterioration of the upper surface of the fuel tank 10 caused by the contact between the sub-harness LM1 and the breather hose LM2, and the fuel tank 10 is suppressed.

As a result, it is possible to suppress the shortening of the service life of the fuel tank 10 caused by the sub-harness LM1 and the breather hose LM2 while suppressing large projection of the fuel cap device 70 upward of the fuel tank 10.

(b) The sub-harness LM1 and the breather hose LM2 that are drawn out from the fuel cap device 70 extend forwardly of the filler member 12. Here, a maximum height position H1 of a portion, which is located farther rearwardly than the filler member 12, of the upper surface of the tank 10 is higher than a maximum height position H2 of a portion, which is located farther forwardly than the filler member 12, of the upper surface of the tank 10. Therefore, as compared to a case in which the sub-harness LM1 and the breather hose LM2 extend rearwardly of the filler member 12, the height positions of the peripheral members of the fuel tank 10 including the sub-harness LM1, the breather hose LM2 and the protection member 80 can be lowered.

Further, a relatively large number of connection portions connected to the main harness MH provided in the motorcycle 100 are present in the front portion of the vehicle. Therefore, in a case in which the sub harness LM1 extends forwardly of the vehicle, it is possible to shorten the distance from the fuel cap device 70 to the position at which the sub-harness LM1 joins the main harness MH. Therefore, the sub-harness LM1 can be not excessively long and have an appropriately set length.

(c) As described above, the attachment piece 60 for attaching the protection member 80 onto the fuel tank 10 is connected to the bottom surface portion 12a of the filler member 12. Thus, as compared with a case in which the attachment piece 60 is provided in a portion, other than the filler member 12, of the upper surface of the fuel tank 10, the height position of the peripheral members of the fuel tank 10 can be lowered.

(d) In the protection member 80, the sub-harness LM1 and the breather hose LM2 are guided into the predetermined passage and held by the first rib 85b, the second rib 86b and the projection piece 89. In this case, the sub-harness LM1 and the breather hose LM2 are prevented from moving out of the predetermined passage in the protection member 80 during traveling of the vehicle. This prevents the sub-harness LM1 and the breather hose LM2 from coming into contact with an unintended portion of the fuel tank 10.

(e) The protection member 80 is formed of a resin material, thereby having flexibility. Thus, even in a case in which the fuel tank 10 contracts or the like with the protection member 80 being attached to the fuel tank 10, the protection member 80 deforms in accordance with the deformation of the fuel tank 10. Therefore, the stable attachment state between the fuel tank 10 and the protection member 80 is maintained.

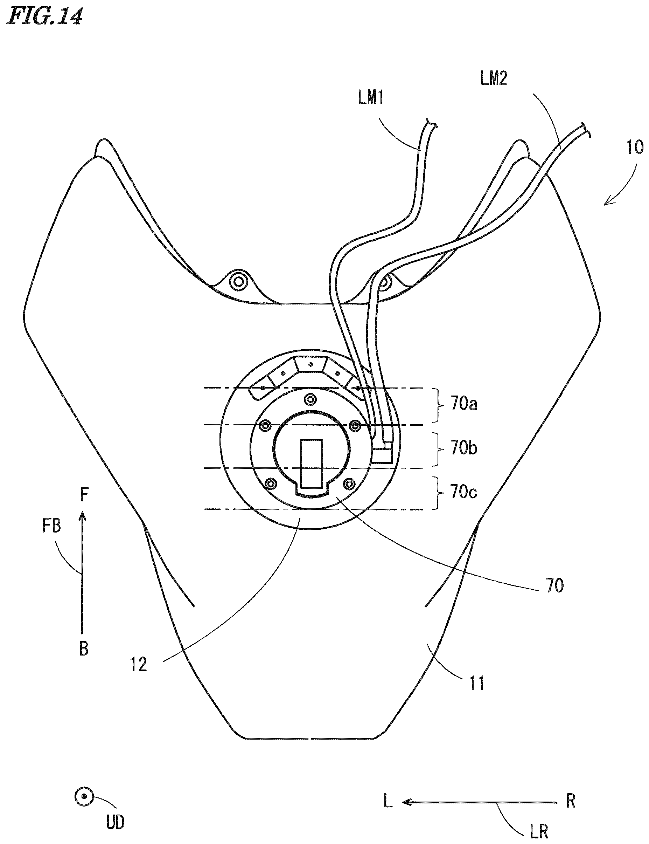

(f) Fig. 14 is an enlarged plan view of the fuel cap device 70 of Fig. 5. As shown in Fig. 14, it is assumed that the fuel cap device 70 is divided into three equal portions in the forward-and-rearward direction FB with the fuel cap device 70 provided at the filler member 12 of the fuel tank 10. Here, the three equally divided portions of the fuel cap device 70 are referred to as a cap front portion 70a, a cap center portion 70b and a cap rear portion 70c from the front to the rear.

In this case, in the fuel cap device 70 according to the present embodiment, the sub-harness LM1 and the breather hose LM2 are connected to the cap center portion 70b of the fuel cap device 70 and are drawn out from the center portion.

Each of the sub-harness LM1 and the breather hose LM2 includes a protection tube or the like for protecting electrical wires or a fluid passage, thereby having a limited bendable range. Therefore, when the sub-harness LM1 and the breather hose LM2 are bent beyond an allowable range, the service life of the sub-harness SL and the breather hose SL may be shortened due to the deformation.

With the above-mentioned configuration, the paths of the sub-harness LM1 and the breather hose LM2 in the filler member 12 can be elongated as compared to a case in which the sub-harness LM1 and the breather hose LM2 are drawn out from the cap front portion 70a. Thus, in a case in which the sub-harness LM1 and the breather hose LM2 are drawn out forwardly of the filler member 12 from the fuel cap device 70, it is not necessary to largely bend the sub-harness LM1 and the breather hose LM2 in the upward-and-downward direction UD. Therefore, it is possible to prevent the sub-harness LM1 and the breather hose LM2 from largely projecting upwardly of the fuel tank 10 while suppressing the shortening of the service lives of the sub-harness LM1 and the breather hose LM2.

(g) On a portion of the upper surface of the fuel tank 10, the tank cover 90 is provided so as to cover the filler member 12, the protection member 80, the sub-harness LM1 and the breather hose LM2 from above. Thus, the sub-harness LM1 and the breather hose LM2 are protected by the tank cover.

### 5. Other Embodiments

(a) In the motorcycle 100, the protection member 80 may be screwed to the attachment piece 60, and a portion of the lower surface of the protection member 80 may be connected to the upper surface 11s of the tank main body 11 with an adhesive.

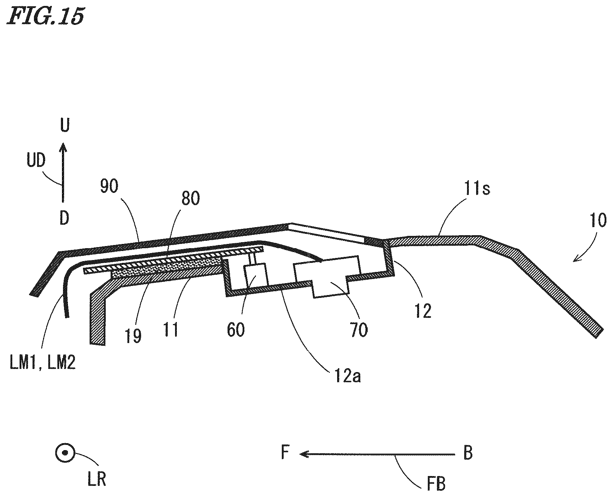

Fig. 15 is a schematic cross-sectional view showing a first example of the configurations of a fuel tank 10 and its peripheral members according to another embodiment. In the example of Fig. 15, the rear end portion (the portion in which a pair of attachment elongated holes 84 are formed) of a protection member 80 is screwed to the attachment piece 60, and the substantially center portion of the lower surface of the protection member 80 adheres to an upper surface 11s of a tank main body 11 with an adhesive 19. In this case, the protection member 80 is more firmly attached onto the fuel tank 10.

(b) In the motorcycle 100, the attachment piece 60 may be attached to a portion, which is located forwardly of the filler member 12, of the upper surface of the fuel tank 10 instead of being attached onto the bottom surface portion 12a of the filler member 12.

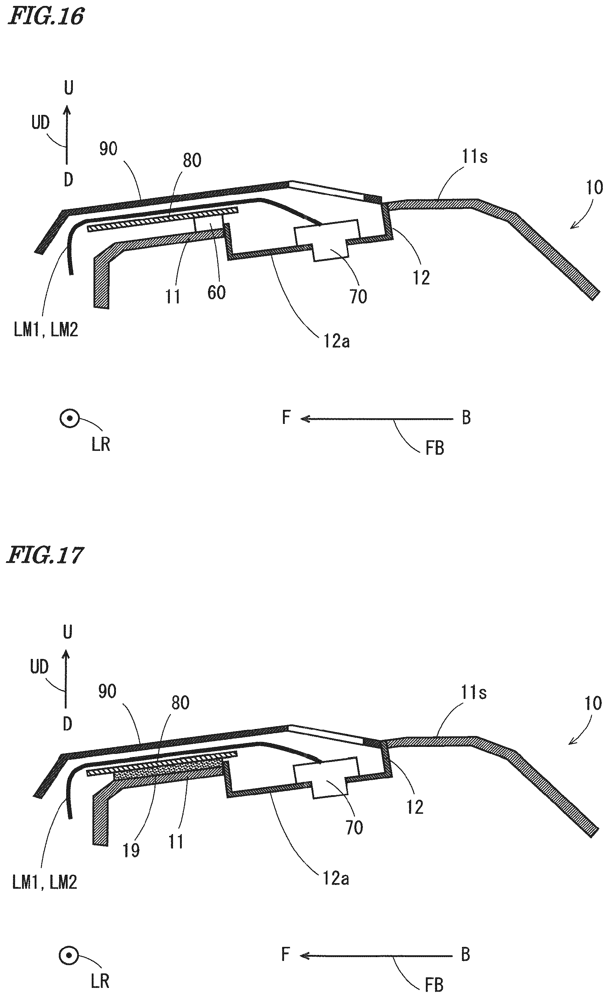

Fig. 16 is a schematic cross-sectional view showing a second example of the configurations of a fuel tank 10 and its peripheral members according to another embodiment. In the example of Fig. 16, an attachment piece 60 is attached to a portion, which is located farther forwardly than a filler member 12, of an upper surface 11a of a tank main body 11 instead of being attached to a bottom surface portion 12a of the filler member 12. Further, a protection member 80 is screwed to the attachment piece 60. In such a configuration, at least a fuel cap device 70 is arranged in the filler member 12, and a sub-harness LM1 and a breather hose LM2 are drawn out forwardly on the protection member 80. Thus, it is possible to suppress the shortening of the service life of the fuel tank 10 caused by the sub-harness LM1 and the breather hose LM2 while suppressing large projection of the fuel cap device 70 forward of the fuel tank 10. It is preferable that the dimension of the attachment piece 60 of the present example in the height direction (the upward-and-downward direction UD) is made be as small as possible.

(c) In the motorcycle 100, the protection member 80 may be attached onto the upper surface 11s of the tank main body 11 with an adhesive instead of being attached to the attachment piece 60. Fig. 17 is a schematic cross-sectional view showing a third example of the configurations of a fuel tank 10 and its peripheral members according to another embodiment.

In the example of Fig. 17, a protection member 80 is directly connected onto a tank main body 11 with an adhesive 19, without the above-mentioned attachment piece 60. In this case, it is not necessary to provide the attachment piece 60, so that the number of components can be reduced. Further, it is possible to suppress an increase in height position of the protection member 80.

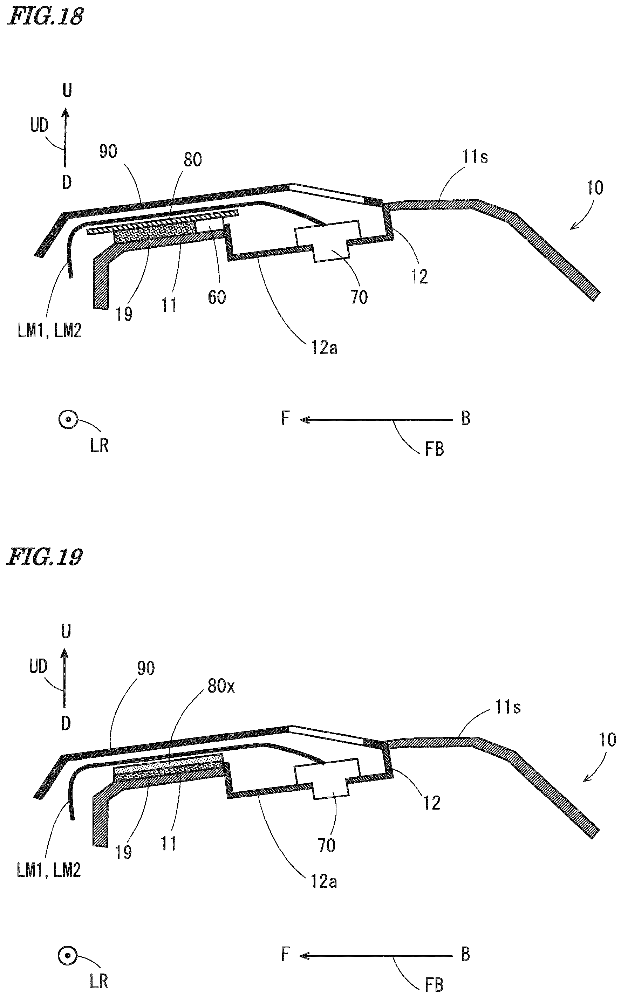

(d) In the motorcycle 100, the protection member 80 may be attached onto the upper surface 11s of the tank main body 11 using the attachment piece 60 and an adhesive on the upper surface 11s of the tank main body 11. Fig. 18 is a schematic cross-sectional view showing a fourth example of the configurations of a fuel tank 10 and its peripheral members according to another embodiment. In this case, a protection member 80 is more firmly attached onto the fuel tank 10.

(e) While the protection member 80 is formed of a resin material in the motorcycle 100 according to the above-mentioned embodiment, the present disclosure is not limited to this. The protection member 80 may be a sheet-like member formed of resin or rubber. Fig. 19 is a schematic cross-sectional view showing a fifth example of the configurations of a fuel tank 10 and its peripheral members according to another embodiment. In the present example, a sheet-like member formed of rubber is used as a protection member 80x. The protection member 80 is attached onto an upper surface 11s of a tank main body 11 via an adhesive 19. In this case, the protection member 80x has flexibility compared to the metallic protection member 80. Thus, even in a case in which the fuel tank 10 contracts or the like with the protection member 80 being attached to the fuel tank 10, the protection member 80 deforms in accordance with the deformation of the fuel tank 10. Therefore, the stable attachment state between the fuel tank 10 and the protection member 80 is maintained.

In a case in which the protection member 80 is formed of a rubber sheet-like member, it is preferable that a member that guides a sub-harness LM1 and a breather hose LM2 to a predetermined position (passage) on the protection member 80 is provided in a tank cover 90 or the fuel tank 10.

(f) The security device 40 is provided in the motorcycle 100 according to the above-mentioned embodiment. Further, the locking device 79 of the fuel cap device 70 changes the lid member 71 between the unlocked state and the locked state based on an operation of the security device 40. The locking device 79 may electrically switch the lid member 71 between an unlocked state and a locked state based on an instruction signal provided from an operation device or the like that can be operated by the user, for example.

(g) In addition to the fuel cap device 70, on the upper surface of the fuel tank 10, another electrical element may be provided in the recess portion formed of the filler member 12. Examples of the other electrical element includes the key cylinder 20, the security device 40, a display device such as a meter unit or a switching device for turning on and off various functions of the motorcycle 100. A sub-harness LM1 for power supply and signal transmission is connected to the other electrical element. Therefore, the sub-harness LM1 connected to other electrical element is drawn out forwardly of the filler member 12 and is arranged on a protection member 80, and thus the same effect as that of the above-mentioned embodiment can be obtained.

(h) In the motorcycle 100 according to the above-mentioned embodiment, a portion of the fuel tank 10 is formed of the filler member 12, so that the recess portion is formed in a portion of the upper surface of the fuel tank 10. However, the present disclosure is not limited to this.

In the fuel tank 10, a recess portion may be formed in a portion of the upper surface 11s of the tank main body 11 without the filler member 12, and the fuel supply port 12c may be formed in the recess portion. Further, the fuel cap device 70 may be provided in the recess portion.

Further, in a case in which a recess portion not having the fuel supply port 12s is formed in a portion of the upper surface 11s of the tank main body 11, an electrical element other than the fuel cap device 70 may be provided in the recess portion. The other electrical element includes the key cylinder 20, the security device 40, a display device, a switching device or the like. Also in this case, the sub-harness LM1 connected to the other electrical element is drawn out forwardly of the filler member 12 and is arranged on the protection member 80, and thus the same effect as that of the above-mentioned embodiment can be obtained.

(I) While the breather hose LM2 is connected to the fuel cap device 70 in the motorcycle 100 according to the above-mentioned embodiment, the present disclosure is not limited to this. The breather hose LM2 does not have to be connected to the fuel cap device 70.

(i) While the above-mentioned embodiment is an example in which the present disclosure is applied to a motorcycle, the present disclosure is not limited to this. The present disclosure may be applied to another straddled vehicle such as a four-wheeled automobile, a motor tricycle or an ATV (All Terrain Vehicle).

### 6. Correspondences Between Constituent Elements in Claims and Parts in Preferred Embodiments

In the following paragraphs, non-limiting examples of correspondences between various elements recited in the claims below and those described above with respect to various preferred embodiments of the present disclosure are explained.

In the above-mentioned embodiment, the motorcycle 100 is an example of a straddled vehicle, the filler member 12 is an example of a recess portion, the upper surface 11s and the filler member 12 of the tank main body 11 are examples of an upper surface of a fuel tank, the fuel tank 10 is an example of a fuel tank, the fuel cap device 70 is an example of an electrical element, the sub-harness LM1 is an example of an electrical wire member, the protection member 80 is an example of a protection member, and the motorcycle 100 is an example of a straddled vehicle.

Further, the portion, which is located farther rearwardly than the filler member 12, of the upper surface 11s of the tank main body 11 is an example of a first portion, the maximum height position H1 is an example of a maximum height position of the first portion, the portion, which is located farther forwardly than the filler member 12, of the upper surface 11s of the tank main body 11 is an example of a second portion, and the maximum height position H2 is an example of a maximum height position of the second portion.

Further, the attachment piece 60 is an example of an attachment piece, the bottom surface portion 12a of the filler member 12 is an example of a bottom surface portion, the peripheral wall portion 12b is an example of a peripheral wall portion, the fuel supply port 12c is an example of a fuel supply port, the lid member 71 is an example of a lid member, the locking device 79 is an example of a locking device, the protection member 80x is an example of a sheet-like member, the adhesive 19 is an example of an adhesive, the first rib 85b, the second rib 86b and the projection piece 89, which are located farther rightwardly than the center, of the protection member 80 are examples of a guide portion, the cap center portion 70b is an example of a center portion of an electrical element, and the tank cover 90 is an example of a tank cover.

### 7. Reference Embodiment

In regard to the configuration of a motorcycle according to a reference embodiment, differences from the motorcycle 100 according to each of the above-mentioned embodiments will be described. The configurations of a fuel tank 10 and its peripheral members in the below-mentioned motorcycle are different from those of the motorcycle 100 according to each of the above-mentioned embodiments.

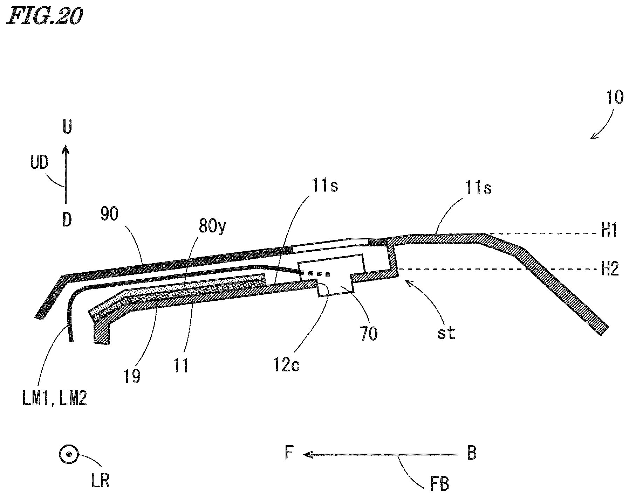

Fig. 20 is a schematic cross-sectional view showing an example of the configurations of the fuel tank 10 and its peripheral members according to the reference embodiment. In the fuel tank 10 of Fig. 20, a filler member 12 is not provided in the fuel tank 10. A step portion st is formed on an upper surface 11s of a tank main body 11 at a position slightly and rearwardly deviated from the center in the forward-and-rearward direction FB.

The maximum height position H1 of a portion, which is located farther rearwardly than the step portion st, of the upper surface 11s of the tank main body 11 is higher than the maximum height position H2 of a portion that is located farther forwardly than the step portion st. A portion, which is located farther forwardly than the step portion st, of the upper surface 11s extends obliquely downwardly in a flat manner from the step portion st toward the front end portion of the fuel tank 10.

A fuel supply port 12c is formed forwardly of the step portion st and in the vicinity of the step portion st. A fuel cap device 70 is attached to a portion of the upper surface 11s in which the fuel supply port 12c is formed. A protection member 80y adheres to a portion, which is located farther forwardly than the fuel supply port 12c, of the upper surface 11c via an adhesive 19. The protection member 80y is a sheet-like member formed of rubber. A tank cover 90 is provided to cover a portion, which is located farther forwardly than the step portion st, of the upper surface of the fuel tank 10 of the tank main body 11.

In this reference embodiment, a sub-harness LM1 and a breather hose LM2 that are drawn out from a fuel cap device 70 are arranged above the protection member 80y on the fuel tank 10. Thus, the sub-harness LM1 and the breather hose LM2 do not directly come into contact with the upper surface of the fuel tank 10. Thus, deterioration of the upper surface of the fuel tank 10 is suppressed. In the present reference embodiment, the protection member 80y may be a plate-like member formed of a resin material. Further, in the present reference embodiment, the step portion st does not have to be formed on the upper surface 11s of the tank main body 11.

### 8. Overview of Embodiments

(Item 1) A straddled vehicle according to item 1 includes a metallic fuel tank having an upper surface in which a recess portion is formed, an electrical element provided in the recess portion, an electrical wire member provided in association with the electrical element, and a protection member provided between the fuel tank and the electrical wire member.

In the straddled vehicle, the electrical element is provided in the recess portion of the upper surface of the fuel tank. Thus, as compared to a case in which the electrical element is provided in a portion of the upper surface of the fuel tank other than the recess portion, large projection of the electrical element upward of the fuel tank is suppressed. Further, the above-mentioned fuel tank is formed of a metallic material, and the protection member is provided between the fuel tank and the electrical wire member. Therefore, deterioration of the upper surface of the fuel tank caused by the contact between the electrical wire member and the fuel tank is suppressed.

As a result, it is possible to suppress the shortening of the service life of the fuel tank caused by the electrical wire member while suppressing large projection of the electrical element upward of the fuel tank.

(Item 2) The straddled vehicle according to item 1, wherein the electrical wire member may extend forwardly of the vehicle from the electrical element.

A relatively large number of connection portions connected to a main harness provided in the straddled vehicle are present in the front portion of the vehicle. Therefore, in a case in which the electrical wire member extends forwardly of the vehicle, it is possible to shorten the distance from the fuel cap device to the position at which the electrical wire member joins the main harness. Therefore, the electrical wire member can be not excessively long and have an appropriately set length.

(Item 3) The straddled vehicle according to item 2, wherein a maximum height position of a first portion, which is located farther rearwardly than the recess portion, of the upper surface of the fuel tank may be higher than a maximum height position of a second portion, which is located farther forwardly than the recess portion, of the upper surface of the fuel tank, and the protection member may be provided on the second portion of the upper surface of the fuel tank.

In this case, the electrical wire member passes through the second portion, which is located farther downwardly than the first portion, of the upper surface of the fuel tank. Further, the protection member is located on the second portion of the fuel tank. Therefore, as compared to a case in which the electrical wire member and the protection member are arranged on the first portion, the height position of the peripheral members of the fuel tank including the electrical wire member and the protection member can be lowered.

(Item 4) The straddled vehicle according to any one of items 1 to 3, may further include an attachment piece that is fixed to the recess portion, and is configured such that the protection member is attachable to the attachment piece.

In this case, the attachment piece is fixed to the recess portion, thereby not projecting upwardly from a region, other than the recess portion, of the upper surface of the fuel tank. Thus, it is possible to lower the height positions of the fuel tank and its peripheral members.

(Item 5) The straddled vehicle according to any one of items 1 to 4, wherein the recess portion may include a bottom surface portion, and an annular peripheral wall portion that extends upwardly from an outer edge of the bottom surface portion, a fuel supply port of the fuel tank may be formed in the bottom surface portion, the electrical element may include a lid member by which the fuel supply port is openable and closable, and a locking device that changes the lid member between a locked state in which the lid member is fixed while closing the fuel supply port and an unlocked state in which the fuel support port is openable and closable based on an electrical signal provided through the electrical wire member.

In this case, it is possible to electrically switch between the locked state and the unlocked state of the lid member of the fuel supply port of the fuel tank.

(Item 6) The straddled vehicle according to any one of items 1 to 5, wherein the protection member may include a sheet-like member formed of resin or rubber, and the sheet-like member may adhere onto a partial region, which is adjacent to the recess portion, of the upper surface of the fuel tank with an adhesive.

In this case, it is possible to lower the height positions of the fuel tank and its peripheral members in the region, other than the recess portion, of the upper surface of the fuel tank.

(Item 7) The straddled vehicle according to any one of items 1 to 6, wherein the protection member may be formed of resin or rubber.

In this case, the protection member has flexibility as compared with the metallic fuel tank. Thus, even in a case in which the fuel tank contracts, etc., the protection member deforms in accordance with the deformation of the fuel tank. Therefore, the stable attachment state between the fuel tank and the protection member is maintained.

(Item 8) The straddled vehicle according to any one of items 1 to 7, wherein the protection member may have a guide portion that guides the electrical wire member into a predetermined passage in the protection member.

In this case, the electrical wire member is prevented from moving out of the predetermined passage during traveling of the vehicle. This prevents the electrical wire member from coming into contact with an unintended portion of the fuel tank.

(Item 9) The straddled vehicle according to any one of items 1 to 8, wherein in a case in which the electrical member is divided into three equal portions in a forward-and-rearward direction of the vehicle while being provided in the fuel tank, the electrical wire member may be connected to a center portion of the electrical element and drawn out from the center portion.

The electrical wire member includes a protection tube or the like that protects electrical wires, thereby having a limited bendable range. Therefore, when the electrical wire member is bent beyond an allowable range, the service life of the electrical wire may be shortened due to the deformation.

With the above-mentioned configuration, because the electrical wire member is drawn out from the center portion of the electrical element, the path of the electrical wire member in the recess portion can be made long as compared to a case in which the electrical wire member is drawn out from a front portion located farther forwardly than the center portion of the electrical element. Thus, in a case in which the electrical wire member is drawn out forwardly of the recess portion from the electrical element, it is not necessary to largely bend the electrical wire member in the upward-and-downward direction of the vehicle. Therefore, it is possible to prevent the electrical wire member from projecting largely and upwardly of the fuel tank while suppressing the shortening of the service life of the electrical wire member.

(Item 10) The straddled vehicle according to any one of items 1 to 9, may further include a tank cover that is provided on the upper surface of the fuel tank and covers the electrical wire member from above.

Thus, the electrical wire member is protected by the tank cover.

While preferred embodiments of the present disclosure have been described above, it is to be understood that variations and modifications will be apparent to those skilled in the art without departing the scope as defined in the appended claims.

## Claims

1. A straddled vehicle (100) comprising:
a metallic fuel tank (10) having an upper surface (11s) in which a recess portion (st) is formed;
an electrical element (20, 40, 70) provided in the recess portion (st);
an electrical wire member (LM1, LM2) provided in association with the electrical element (20, 40, 70); and
a protection member (80) provided between the fuel tank (10) and the electrical wire member (20, 40, 70)
wherein the recess portion (st) includes a bottom surface portion (12a), and
an annular peripheral wall portion (12b) that extends upwardly from an outer edge of the bottom surface portion (12a), **characterized in that**
a fuel supply port (12c) of the fuel tank (10) is formed in the bottom surface portion (12a),
the electrical element (70) includes:
a lid member (71) by which the fuel supply port (12c) is openable and closable, and
a locking device (79) that changes the lid member (71) between a locked state in which the lid member (71) is fixed while closing the fuel supply port (12c) and an unlocked state in which the fuel support port (12c) is openable and closable based on an electrical signal provided through the electrical wire member (LM1, LM2).

2. The straddled vehicle according to claim 1, wherein
the electrical wire member (LM1, LM2) extends forwardly of the vehicle from the electrical element (20, 40, 70).

3. The straddled vehicle according to claim 2, wherein
a maximum height position (H1) of a first portion, which is located farther rearwardly than the recess portion (st), of the upper surface of the fuel tank (10) is higher than a maximum height position (H2) of a second portion, which is located farther forwardly than the recess portion (st), of the upper surface of the fuel tank (10), and
the protection member (80) is provided on the second portion of the upper surface of the fuel tank (10).

4. The straddled vehicle according to any one of claims 1 to 3, further comprising an attachment piece (60) that is fixed to the recess portion (st), and is configured such that the protection member (80) is attachable to the attachment piece (60).

5. The straddled vehicle according to any one of claims 1 to 4, wherein
the protection member (80) includes a sheet-like member formed of resin or rubber, and
the sheet-like member adheres onto a partial region, which is adjacent to the recess portion (st) of the upper surface (11s) of the fuel tank (10) with an adhesive (19).

6. The straddled vehicle according to any one of claims 1 to 5, wherein
the protection member (80) is formed of resin or rubber.

7. The straddled vehicle according to any one of claims 1 to 6, wherein
the protection member (80) has a guide portion that guides the electrical wire (LM1, LM2) member into a predetermined passage in the protection member (80).

8. The straddled vehicle according to any one of claims 1 to 7, wherein
in a case in which the electrical member (70) is divided into three equal portions (70a, 70b, 70c) in a forward-and-rearward direction of the vehicle while being provided in the fuel tank (10), the electrical wire member (LM1, LM2) is connected to a center portion (70b) of the electrical element (70) and drawn out from the center portion (70b).

9. The straddled vehicle according to any one of claims 1 to 8, further comprising a tank cover (90) that is provided on the upper surface (11s) of the fuel tank (10) and covers the electrical wire member (LM1, LM2) from above.

## Patentansprüche

1. Spreizsitz-Fahrzeug (100), das umfasst:
einen Metall-Kraftstofftank (10), der eine Oberseite (11s) aufweist, in der ein Vertiefungsabschnitt (st) ausgebildet ist;
ein elektrisches Element (20, 40, 70), das in dem Vertiefungsabschnitt (st) vorhanden ist;
ein Stromdrahtteil (LM1, LM2), das in Verbindung mit dem elektrischen Element (20, 40, 70) vorhanden ist; sowie
ein Schutzteil (80), das zwischen dem Kraftstofftank (10) und dem Stromdrahtteil (20, 40, 70) vorhanden ist,
wobei der Vertiefungsabschnitt (st) enthält:
einen Unterseitenabschnitt (12a) sowie
einen ringförmigen Umfangswandabschnitt (12b), der sich von einem äußeren Rand des Unterseitenabschnitts (12a) nach oben erstreckt,
**dadurch gekennzeichnet, dass**
eine Kraftstoffzufuhr-Öffnung (12c) des Kraftstofftanks (10) in dem Unterseitenabschnitt (12a) ausgebildet ist,
das elektrische Element (70) einschließt:
ein Deckelteil (71), mit dem die Kraftstoffzufuhr-Öffnung (12c) geöffnet und geschlossen werden kann, sowie
eine Verriegelungseinrichtung (79), mit der das Deckelteil (71) auf Basis eines über den Stromdrahtteil (LM1, LM2) bereitgestellten elektrischen Signals zwischen einem verriegelten Zustand, in dem das Deckelteil (71) fixiert ist und die Kraftstoffzufuhr-Öffnung (12c) geschlossen ist, und einem entriegelten Zustand verstellt werden kann, in dem die Kraftstoffzufuhr-Öffnung (12c) geöffnet und geschlossen werden kann.

2. Spreizsitz-Fahrzeug nach Anspruch 1, wobei:
das Stromdrahtteil (LM1, LM2) sich von dem elektrischen Element (20, 40, 70) aus vor das Fahrzeug erstreckt.

3. Spreizsitz-Fahrzeug nach Anspruch 2, wobei
eine maximale Höhenposition (H1) eines ersten Abschnitts der Oberseite des Kraftstofftanks (10), der weiter hinten liegt als der Vertiefungsabschnitt (st) höher ist als eine maximale Höhenposition (H2) eines zweiten Abschnitts der Oberseite des Kraftstofftanks (10), der weiter vorn liegt als der Vertiefungsabschnitt (st), und
das Schutzteil (80) an dem zweiten Abschnitt der Oberseite des Kraftstofftanks (10) vorhanden ist.

4. Spreizsitz-Fahrzeug nach einem der Ansprüche 1 bis 3, das des Weiteren ein Anbringungsstück (60) umfasst, das an dem Vertiefungsabschnitt (st) befestigt und so ausgeführt ist, dass das Schutzteil (80) an dem Anbringungsstück (60) angebracht werden kann.

5. Spreizsitz-Fahrzeug nach einem der Ansprüche 1 bis 4, wobei
das Schutzteil (80) ein folienartiges Teil einschließt, das aus Kunststoff oder Gummi besteht, und
das folienartige Teil mit einem Klebstoff (19)an einem Teilbereich haftet, der an den Vertiefungsabschnitt (s) der Oberseite (11s) des Kraftstofftanks (10) angrenzt.

6. Spreizsitz-Fahrzeug nach einem der Ansprüche 1 bis 5 , wobei
das Schutzteil (80) aus Kunststoff oder Gummi besteht.

7. Spreizsitz-Fahrzeug nach einem der Ansprüche 1 bis 6, wobei
das Schutzteil (80) einen Führungsabschnitt aufweist, der das Stromdrahtteil (LM1, LM2) in einen vorgegebenen Durchlass in dem Schutzteil (80) hinein führt.

8. Spreizsitz-Fahrzeug nach einem der Ansprüche 1 bis 4, wobei
wenn das elektrische Element (70) an dem Kraftstofftank (10) vorhanden ist und in einer Längsrichtung des Fahrzeugs in drei gleiche Abschnitte (70a, 70b, 70c) unterteilt ist, das Stromdrahtteil (LM1, LM2) mit einem Mittelabschnitt (70b) des elektrischen Elementes (70) verbunden ist und über den Mittelabschnitt (70b) herausgeführt wird.

9. Spreizsitz-Fahrzeug nach einem der Ansprüche 1 bis 8, das des Weiteren eine Tankabdeckung (90) umfasst, die an der Oberseite (11s) des Kraftstofftanks (10) vorhanden ist und das Stromdrahtteil (LM1, LM2) von oben abdeckt.

## Revendications

1. Véhicule chevauché (100) comprenant :
un réservoir de carburant (10) métallique ayant une surface supérieure (11s) dans laquelle est formée une partie évidée (st) ;
un élément électrique (20, 40, 70) prévu sur la partie évidée (st) ;
un élément de fil électrique (LM1, LM2) prévu en association avec l'élément électrique (20, 40, 70) ; et
un élément de protection (80) prévu entre le réservoir de carburant (10) et l'élément de fil électrique (20, 40, 70),
dans lequel la partie évidée (st) inclut
une partie de surface inférieure (12a), et
une partie de paroi périphérique annulaire (12b) qui s'étend vers le haut à partir d'un bord extérieur de la partie de surface inférieure (12a),
**caractérisé en ce que**
un orifice d'alimentation en carburant (12c) du réservoir de carburant (10) est formé dans la partie de surface inférieure (12a),
l'élément électrique (70) inclut :
un élément de couvercle (71) qui permet d'ouvrir et de fermer l'orifice d'alimentation en carburant (12c), et
un dispositif de verrouillage (79) qui fait passer l'élément de couvercle (71) entre un état verrouillé dans lequel l'élément de couvercle (71) est fixe tout en fermant l'orifice d'alimentation en carburant (12c) et un état déverrouillé dans lequel l'orifice d'alimentation en carburant (12c) est ouvrable et fermable sur la base d'un signal électrique prévu à travers l'élément de fil électrique (LM1, LM2).

2. Véhicule chevauché selon la revendication 1, dans lequel
l'élément de fil électrique (LM1, LM2) s'étend vers l'avant du véhicule à partir de l'élément électrique (20, 40, 70).

3. Véhicule chevauché selon la revendication 2, dans lequel
une position de hauteur maximale (H1) d'une première partie, qui est située plus loin vers l'arrière que la partie évidée (st), de la surface supérieure du réservoir de carburant (10) est plus élevée qu'une position de hauteur maximale (H2) d'une deuxième partie, qui est située plus loin vers l'avant que la partie évidée (st), de la surface supérieure du réservoir de carburant (10), et
l'élément de protection (80) est prévu sur la deuxième partie de la surface supérieure du réservoir de carburant (10).

4. Véhicule chevauché selon l'une quelconque des revendications 1 à 3, comprenant en outre une pièce de fixation (60) qui est fixée à la partie évidée (st), et qui est configurée de sorte que l'élément de protection (80) puisse être fixé à la pièce de fixation (60).

5. Véhicule chevauché selon l'une quelconque des revendications 1 à 4, dans lequel
l'élément de protection (80) inclut un élément en forme de feuille formé de résine ou de caoutchouc, et
l'élément en forme de feuille adhère à une partie adjacente à la partie évidée (st) de la surface supérieure (11s) du réservoir de carburant (10) en utilisant un adhésif (19).

6. Véhicule chevauché selon l'une quelconque des revendications 1 à 5, dans lequel
l'élément de protection (80) est formé de résine ou de caoutchouc.

7. Véhicule chevauché selon l'une quelconque des revendications 1 à 6, dans lequel
l'élément de protection (80) a une partie de guidage qui guide l'élément de fil électrique (LM1, LM2) dans un passage prédéterminé dans l'élément de protection (80).

8. Véhicule chevauché selon l'une quelconque des revendications 1 à 7, dans lequel
dans un cas où l'élément électrique (70) est divisé en trois parties égales (70a, 70b, 70c) dans une direction avant-arrière du véhicule tout en étant prévu dans le réservoir de carburant (10), l'élément de fil électrique (LM1, LM2) est connecté à une partie centrale (70b) de l'élément électrique (70) et tiré hors de la partie centrale (70b).

9. Véhicule chevauché selon l'une quelconque des revendications 1 à 8, comprenant en outre un couvercle de réservoir (90) qui est prévu sur la surface supérieure (11s) du réservoir de carburant (10) et couvre l'élément de fil électrique (LM1, LM2) par le haut.
